# EUROPEAN PATENT SPECIFICATION

(11) **EP 4 414 331 B1**
(45) Date of publication and mention of the grant of the patent: **29.01.2025**
(21) Application number: 24155663.8
(22) Date of filing: 05.02.2024
(51) Int. Cl.: C02F 1/52, C02F 11/143, C01F 7/74, C22B 7/00, C22B 21/00, C02F 11/127, C02F 103/16

(54) **METHOD OF REMOVING ALUMINIUM WASTE IN WASTEWATER**
VERFAHREN ZUR ENTFERNUNG VON ALUMINIUMABFÄLLEN AUS ABWASSER
PROCÉDÉ D'ÉLIMINATION DE DÉCHETS D'ALUMINIUM DANS DES EAUX USÉES

(30) Priority: 09.02.2023 KR 20230017467
(43) Date of publication of application: 14.08.2024
(73) Proprietor: SK Innovation Co., Ltd., Seoul 03188 (KR)
(72) Inventor: SONG, Jae Yang, 34124 Daejeon (KR)
(74) Representative: Frick, Robert

(56) References cited:
- US-A- 3 725 266
- US-A- 3 953 306
- US-A- 5 674 402
- FOUAD MAHMOUD M ET AL: "Utilization of Drinking Water Treatment Slurry to Produce Aluminum Sulfate Coagulant", WATER ENVIRONMENT RESEARCH, WATER ENVIRONMENT FEDERATION, US, vol. 89, no. 2, 1 February 2017 (2017-02-01), pages 186 - 191, XP001597703, ISSN: 1061-4303, DOI: 10.2175/106143016X14504669769056

## Description

### BACKGROUND OF THE INVENTION

### 1. Field of the Invention

The present invention relates to a method of removing aluminium waste from wastewater.

### 2. Description of the Related Art

Inorganic coagulants are chemicals that neutralize the surface charge of organic and inorganic colloidal particles contained in wastewater, thereby coagulating and settling the colloidal particles to facilitate the removal thereof. The inorganic coagulants have been used in the field of wastewater treatment for a long time. Among them, a coagulant containing aluminium sulfate, such as aluminium sulfate hydrate (called alum), is a typical inorganic coagulant used in wastewater treatment.

Wastewater from various industries, such as wastewater from the aluminium anodizing industry, wastewater from construction sites, and wastewater from the treatment process of used batteries, contains aluminium. To discharge industrial wastewater to nature, it is necessary to remove aluminium and other pollutants from the industrial wastewater. In this regard, the inorganic coagulants described above are mainly used to remove aluminium and pollutants from wastewater.

United States Patent 3,725,266 discloses a process for removing metal contaminants, including aluminium, from contaminated industrial waste water by precipitating the metal compound contaminants from the waste water.

### SUMMARY OF THE INVENTION

The present invention proposes a method of removing aluminium waste from wastewater.

A method of removing aluminium waste from wastewater according to the invention includes: (a) supplying wastewater containing aluminium as a feed, (b) separating the wastewater into a liquid component and a sludge component containing the aluminium, (c) reacting the sludge component and sulfuric acid to produce aluminium sulfate, (d) mixing the aluminium sulfate with alcohol to produce aluminium sulfate hydrate, and (e) adding the aluminium sulfate hydrate produced in step (d) to the wastewater supplied in step (a), to act as coagulant for the aluminium.

According to one embodiment, in the supplying of wastewater, the wastewater may have an aluminium content of 15 wt% or more, preferably 20 wt% or more, more preferably 30 wt% or more, calculated based on the weight of the aluminium ion without counter ions relative to the total weight of the waste water.

According to one embodiment, the aluminium comprised in the wastewater supplied in step (a) is at least in part comprised in an oxide or hydroxide form, preferably as boehmite (AlOOH).

According to one embodiment, the method additionally comprises adding externally sourced aluminium sulfate hydrate to the wastewater supplied in step (a).

According to one embodiment, the separating according to step (b) comprises centrifugation.

According to one embodiment, the sludge component obtained in step (b) has an aluminium content of 40 wt% or more, preferably 45 wt% or more, more preferably 50 wt% or more.

According to one embodiment, the reacting of the sludge component with sulfuric acid according to step (c) comprises adding the sludge component to of a sulfuric acid solution having a concentration of 0.5 to 1.5 M, preferably 0.8 to 1.2 M, at a temperature of 60°C to 100°C C, preferably 65°C to 90°C, more preferably 70°C to 80°C, for 1 to 5 hours, preferably 2 to 4 hours, more preferably 2.5 to 3.5 hours.

According to one embodiment, the amount of the sludge component added to the sulfuric acid solution may be 5 to 15 wt% wt%, preferably 7 to 12 wt%, more preferably 8 to 11 wt%, based on the total weight of the (wet) sludge component and with respect to the weight of the sulfuric acid solution.

According to one embodiment, the alcohol mixed with the aluminium sulfate in step (d) comprises ethanol, propanol, butanol, or a combination thereof.

According to one embodiment, in the mixing of the aluminium sulfate with alcohol according to step (d), the aluminium sulfate and the alcohol are mixed in a volume ratio of 1:2 to 1:5 5, preferably 1:3 to 1:4.5, more preferably 1:3.5 to 1:4.5 (aluminum sulfate / alcohol). The volume of aluminium sulfate is understood as the volume of the combined sulfuric acid solution including the sludge.

According to one embodiment, in the adding of the aluminium sulfate hydrate to the wastewater, the amount of the aluminium sulfate hydrate added to the wastewater may be 10 to 300 ppm based on the mass of the wastewater, calculated based on the weight of the aluminium sulfate (mono or higher)hydrate without counter ions relative to the total weight of the waste water.

According to one embodiment, the method may further include supplying the aluminium sulfate hydrate to a separate wastewater treatment plant.

By a method according to the invention, aluminium waste can be removed environment-friendly and cost-effectively.

### BRIEF DESCRIPTION OF THE DRAWINGS

FIG. 1 is a flowchart of a method of removing aluminium waste from wastewater, according to one embodiment of the invention;
FIG. 2 is a schematic diagram illustrating a method of regenerating aluminium sulfate;
FIG. 3 is a diagram illustrating change in the amount of aluminium hydroxide produced as a function of reaction time between a sludge component and sulfuric acid;
FIG. 4 shows FT-IR measurements of aluminium hydroxide and potassium aluminium sulfate obtained as described; and
FIG. 5 is a diagram illustrating the difference in appearance between aluminium sulfate-fed wastewater and raw wastewater.

### DESCRIPTION OF THE PREFERRED EMBODIMENTS

The above and other objectives, features, and advantages of the present invention will be more clearly understood from the following detailed description taken in conjunction with the accompanying drawings.

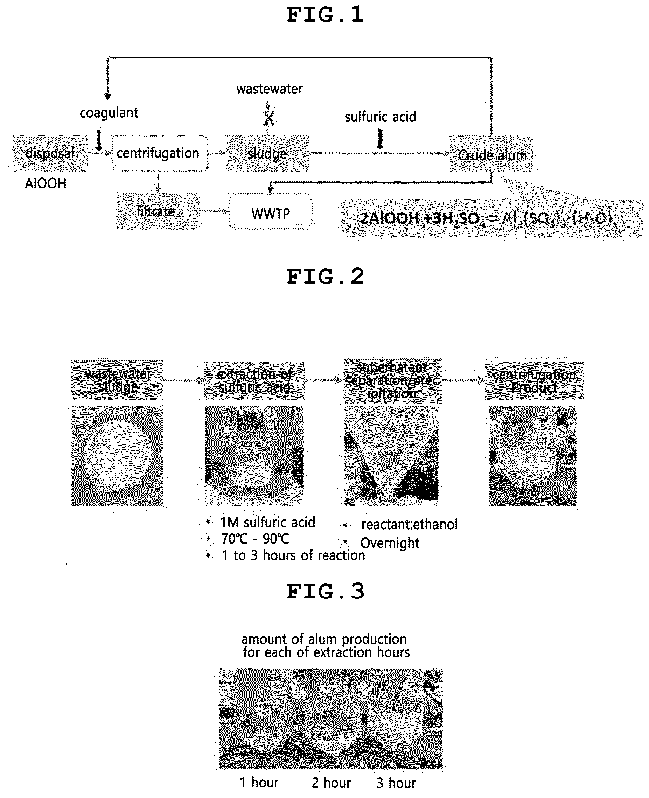

FIG. 1 is a flowchart of a method of removing aluminium waste from wastewater, according to one embodiment;

The method according to the invention of removing aluminium waste from wastewater includes: (a) supplying wastewater containing aluminium as a feed, (b) separating the wastewater into a liquid component and a sludge component containing the aluminium, (c) reacting the sludge component with sulfuric acid to produce aluminium sulfate, (d) mixing the aluminium sulfate with alcohol to produce aluminium sulfate hydrate, and (e) adding the aluminium sulfate hydrate produced in step (d) to the wastewater of step (a).

The wastewater in the supplying step may be any wastewater that contains aluminium. Additionally, the aluminium in the wastewater may be present in any form. For example, the aluminium contained in the wastewater may be in an oxide form and/or a hydroxide form.

In one embodiment, the aluminium-containing wastewater supplied as a feed may have an aluminium content of 15 wt% or more. Specifically, the wastewater may have an aluminium content of at least 15 wt%, preferably at least 20 wt%, and more preferably at least 30 wt%. Since the wastewater may have a high aluminium content, boehmite in the wastewater may be highly pure.

In one embodiment, the aluminium waste may contain boehmite (AlOOH). As described below, the aluminium waste contained in the wastewater can be regenerated into aluminium sulfate hydrate, which can be used as a coagulant by the method of the present invention. In particular, aluminium sulfate hydrate is typically obtained by the Bayer method in which sulfuric acid is reacted with alumite (Al(OH₎₃), which is obtained by reacting an aluminium-containing compound such as bauxite with NaOH and crystallizing the reaction product. Therefore, the composition of the aluminium waste is not particularly limited if the aluminium waste contains aluminium. On the other hand, boehmite can be converted to aluminium sulfate hydrate by direct reaction with sulfuric acid without going through the Bayer method described above. Therefore, in terms of process simplification and cost reduction, the aluminium waste can preferably include boehmite.

The method of the invention includes step (b) of separating the wastewater into a liquid component and a sludge component containing aluminium. The step is a process of separating the wastewater into a liquid component and an aluminium-containing sludge component which is used to produce aluminium sulfate hydrate. For example, the separation may be performed by centrifugation. Preferably, the separation may be performed by the addition of a coagulation, stirring, and precipitation of the sludge component. The liquid component may contain insoluble suspended solids and a tract amount of residual aluminium that has not been separated as the sludge component. The liquid component may be processed in a separate wastewater treatment plant and then be discharged to nature.

In one embodiment, the sludge component may contain 40 wt% or more of aluminium. The sludge component may contain more than 40 wt% of aluminium. When the aluminium content is converted to a boehmite content, more than 90% of boehmite may be contained. Such a high boehmite content can increase the yield of aluminium sulfate obtained from the sludge component in later stages. The aluminium content of the sludge component may be preferably 45 wt% or more and more preferably 50 wt%.

According to one embodiment, the step of separating the wastewater into a liquid component and a sludge component may involve adding externally sourced aluminium sulfate hydrate. As described above, the step of separating the wastewater into a liquid component and a sludge component is preferably performed by adding a coagulant to settle and separate the sludge component. Here, aluminium sulfate hydrate may be used as a coagulant. The aluminium sulfate hydrate used in this step may be externally sourced aluminium sulfate hydrate rather than aluminium sulfate hydrate regenerated from aluminium waste present in the wastewater. The externally sourced aluminium sulfate hydrate may be added to the wastewater at any point in time. For example, in step (e) of the method, the externally sourced aluminium sulfate hydrate may be added to the wastewater at an early stage, for example, before aluminium sulfate hydrate regenerated from aluminium waste present in the wastewater is introduced into the wastewater. Alternatively, the externally sourced aluminium sulfate hydrate may be added to the wastewater as an additional coagulant after the aluminium sulfate hydrate regenerated from aluminium waste present in the wastewater is introduced into the wastewater to further promote coagulation and separation of the sludge component.

The method further includes step (c) of mixing sulfuric acid with the sludge component to produce aluminium sulfate. Aluminium, especially boehmite, contained in the sludge component reacts with the sulfuric acid and changes to aluminium sulfate according to the following reaction formula:

(Reaction Formula 1) 2AlOOH + 3H₂SO₄ → Al₂(SO₄)₃ + 4H₂O

In one embodiment, step (c) may involve stirring. This may aid to increase the reaction rate by facilitating contact between the sludge component and sulfuric acid. The aluminium sulfate produced by the reaction exists as a supernatant in a mixture of the sludge component and the sulfuric acid, and the aluminium sulfate is recovered by separating only the supernatant from the mixture.

In one embodiment, the step of reacting the sludge component with sulfuric acid may be carried out with the use of a sulfuric acid solution having a concentration of 0.5 to 1.5 M, preferably 0.8 to 1.2 M, more preferably 1 M at a temperature of 60°C to 100°C for 1 to 5 hours. The sulfuric acid solution with a concentration of 1 M is preferred in terms of convenience in constructing process equipment.

When the temperature is lower than 60°C in the step of reacting the sludge component with sulfuric acid, the heat required Reaction Formula 1, which is an endothermic reaction, is not sufficiently supplied, and thus the yield of aluminium sulfate decreases. When the temperature is higher than 100°C, since the reverse reaction occurs, the yield of aluminium sulfate decreases. In one embodiment, the step of reacting the sludge component with sulfuric acid may be preferably performed at a temperature of 65°C to 90°C and more preferably at a temperature of 70°C to 80°C.

The step of reacting the sludge component with sulfuric acid may be performed for 1 to 5 hours. When the reaction time is shorter than 1 hour, since the time for mixing the sludge component with sulfuric acid is not sufficient, the reaction may not easily occur. In addition, when the reaction time is longer than 5 hours, the process cost increases significantly, and the yield of aluminium sulfate is not good for the process cost. In this step, the reaction time may be preferably 2 to 4 hours and more preferably 2.5 to 3.5 hours.

In one embodiment, the amount of the sludge component relative to the weight of the sulfuric acid solution may be in a range of 5 to 15 wt%. When the amount of the sludge component is less than 5 wt% relative to the weight of the sulfuric acid solution, a large amount of unreacted sulfuric acid solution remains, which reduces reaction efficiency. When the amount is more than 15 wt%, there is difficulty in stirring. In the step of reacting the sludge component with sulfuric acid, the amount of the sludge component may be preferably 7 to 12 wt% and more preferably 8 to 11 wt%, based on the weight of the sulfuric acid solution.

The method further includes step (d) of mixing the aluminium sulfate with alcohol to produce aluminium hydroxide hydrate. The aluminium sulfate produced by Reaction Formula 1 is insoluble in alcohol. Therefore, when aluminium sulfate and alcohol are mixed, precipitation occurs to produce aluminium sulfate hydrate, which is a solid phase. More specifically, when aluminium sulfate and alcohol are mixed, aluminium sulfate precipitates in the form of an anhydride (Al₂(SO₄)₃), and water as binding water binds to the anhydrous aluminium sulfate during the precipitation, thereby producing aluminium sulfate hydrate (Al₂(SO₄)_{3·}xH₂O). Aluminium sulfate can be used as a coagulant, but aluminium sulfate hydrate, which is a more concentrated form produced by precipitation, is superior to aluminium sulfate in terms of coagulation ability.

According to one embodiment, in the step of mixing aluminium sulfate with alcohol, the alcohol may be ethanol, propanol, butanol, or a combination thereof. Since the hydrated aluminium sulfate is insoluble in alcohol, alcohol can be used to convert aluminium sulfate to aluminium sulfate hydrate. In terms of cost, as the alcohol, ethanol is preferred.

According to one embodiment, in the step of mixing aluminium sulfate with alcohol, the volume ratio of the aluminium sulfate to the alcohol may be in a range of from 1:2 to 1:5. The volume ratio described above is advantageous in terms of the efficiency of the generation and precipitation of aluminium sulfate hydrate. Specifically, the volume ratio of the aluminium sulfate to the alcohol may be in a range of 1:2 to 1:5, preferably a range of 1:3 to 1:4.5, and more preferably a range of 1:3.5 to 1:4.5.

The method further includes step (e) of adding the aluminium sulfate hydrate produced in step (d) to the wastewater of step (a). As described above, when the aluminium sulfate hydrate is supplied to the wastewater, the aluminium sulfate hydrate serves as a coagulant that neutralizes the surface charge of organic and inorganic colloidal particles contained the wastewater so that the colloidal particles can be easily coagulated and settled. In this way, the aluminium sulfate hydrate can remove colloidal particles contained in wastewater.

The aluminium sulfate hydrate added to the wastewater in step (e) is obtained by using aluminium contained in the wastewater as a raw material. Therefore, the method of the present invention can remove waste, particularly aluminium-containing waste, from wastewater while minimizing the usage of externally sourced coagulants, thereby enabling cost-effective wastewater treatment.

In one embodiment, in the step of adding the aluminium sulfate hydrate to the wastewater, the amount of the aluminium sulfate hydrate added to the wastewater may 10 to 300 ppm relative to the mass of the wastewater. In one embodiment, the regenerated aluminium sulfate hydrate is introduced into the wastewater in the presence of externally sourced aluminium sulfate hydrate. In this case, it is possible to reduce the usage of externally sourced aluminium sulfate hydrate that is used to coagulate and remove the sludge component containing aluminium.

In one embodiment, the method may further include the step of supplying the aluminium sulfate hydrate to a separate wastewater treatment plant. The liquid component separated from the wastewater may contain insoluble suspended solids as well as a trace amount of residual aluminium that has not been separated as the sludge component. The liquid component may be fed to a separate wastewater treatment plant, and aluminium sulfate hydrate as a coagulant may also be fed to the plant to coagulate and remove the residual aluminium and insoluble suspended solids.

In other words, the method of the present invention minimizes the amount of an externally sourced coagulant, and generates aluminium sulfate hydrate that can be used as a coagulant from aluminium waste contained in wastewater, thereby enabling value-added waste recycling. The method of the present invention is a two-stage wastewater treatment process in which wastewater is first separated into a liquid component and a sludge component, and the liquid component is subsequently further processed in a separate wastewater treatment plant. Therefore, the method of the present invention can increase the efficiency of waste removal from the wastewater. Furthermore, since the coagulant supplied to the wastewater treatment plant is the aluminium sulfate hydrate generated from aluminium waste contained in wastewater, the method of the present invention can considerably reduce the cost of wastewater treatment.

Hereinafter, the preferred examples will be described to aid understanding of the present invention.

### Example

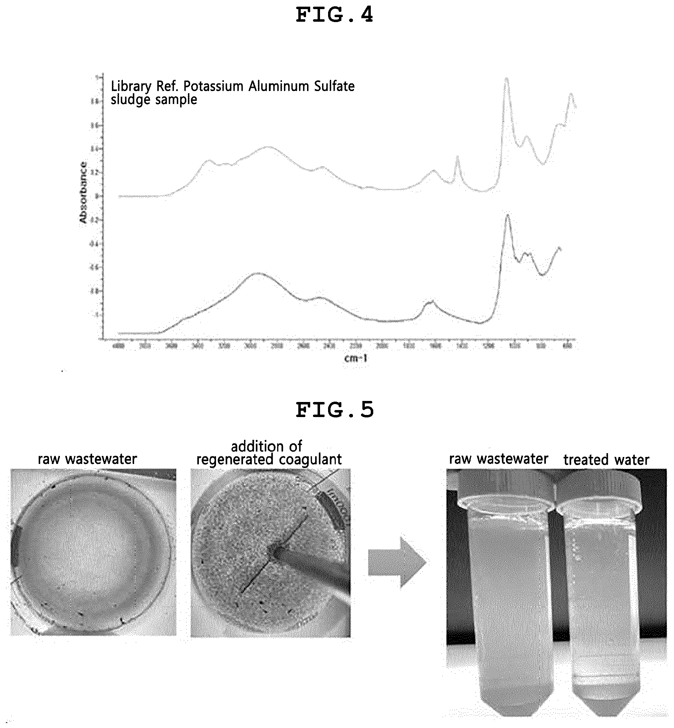

An exemplary method for removing aluminium waste contained in wastewater according to one embodiment of the present invention was performed at a laboratory scale in the sequence shown in FIG. 2. Raw wastewater containing 43% by mass of aluminium in the form of boehmite (AlOOH) was separated into a liquid component and a sludge component containing the boehmite by centrifugation. The separated sludge component was reacted with 1 M of sulfuric acid solution at a temperature of 80°C. The amount of the sludge component, which is a reactant, added to the 1 M of sulfuric acid solution was 20 wt%, and the reaction time was 1 to 3 hours. Referring to FIG. 3, it is possible to visually observe the difference in the amount of aluminium sulfate hydrate produced when the time for reaction between the sludge component and the sulfuric acid solution was varied to 1 hour, 2 hours, and 3 hours. The FTIR analysis results of the sludge component containing aluminium sulfate hydrate obtained through reaction between the sludge component and the sulfuric acid are shown in FIG. 4. The results show a peak similar to the peak of the FTIR analysis of potassium aluminium sulfate (see the lower graph in FIG. 4). Afterwards, the sludge component containing aluminium sulfate was mixed with ethanol in a volume ratio of 1:4 and left for 24 hours. Through the series of steps, aluminium sulfate hydrate precipitated. The precipitate, i.e., aluminium sulfate hydrate was added to distilled water to give an aluminium sulfate hydrate solution with a concentration of 60 g/L. The solution exhibited a pH of 1.6 and was added to wastewater. The feed concentration of the aluminium sulfate hydrate added to the wastewater was approximately 120 ppm by mass. The wastewater into which the aluminium sulfate hydrate solution was added was stirred at 180 rpm for 3 minutes and then stirred at 50 rpm for 3 minutes. The appearance of the raw wastewater and treated water was observed, and the results are shown in FIG. 5. That is, the images of the water observed before and after the addition of the aluminium sulfate hydrate solution are shown in FIG. 5.

As illustrated in FIG. 5, the raw wastewater was overall turbid when visually observed with the eyes, while the treated water with the aluminium sulfate solution added was relatively transparent compared to the raw wastewater because suspended solids were coagulated to form agglomerates.

## Claims

1. A method of removing aluminium waste from wastewater, the method comprising:
(a) supplying wastewater containing aluminium as a feed;
(b) separating the wastewater into a liquid component and a sludge component containing the aluminium;
(c) reacting the sludge component with sulfuric acid to produce aluminium sulfate;
(d) mixing the aluminium sulfate with alcohol to produce aluminium sulfate hydrate; and
(e) adding the aluminium sulfate hydrate produced in step (d) to the wastewater supplied in step (a), to act as a coagulant for the aluminium.

2. The method of claim 1, wherein the wastewater supplied in step (a) has an aluminium content of 15 wt% or more, preferably 20 wt% or more, more preferably 30 wt% or more.

3. The method of any preceding claim, wherein the aluminium comprised in the wastewater supplied in step (a) is at least in part comprised in an oxide or hydroxide form, preferably as boehmite (AlOOH).

4. The method of any preceding claim, wherein the method additionally comprises adding externally sourced aluminium sulfate hydrate to the wastewater supplied in step (a).

5. The method of any preceding claim, wherein the separating according to step (b) comprises centrifugation.

6. The method of any preceding claim, wherein the sludge component obtained in step (b) has an aluminium content of 40 wt% or more, preferably 45 wt% or more, more preferably 50 wt% or more.

7. The method of any preceding claim, wherein the reacting of the sludge component with sulfuric acid according to step (c) comprises adding the sludge component to a sulfuric acid solution having a concentration of 0.5 to 1.5 M, preferably 0.8 to 1.2 M, and allowing to react at a temperature of 60°C to 100°C, preferably 65°C to 90°C, more preferably 70°C to 80°C, for 1 to 5 hours, preferably 2 to 4 hours, more preferably 2.5 to 3.5 hours.

8. The method of claim 7, wherein the sludge component is added to the sulfuric acid solution in an amount of 5 to 15 wt%, preferably 7 to 12 wt%, more preferably 8 to 11 wt% based on the weight of the sulfuric acid solution.

9. The method of any preceding claim, wherein the alcohol mixed with the aluminium sulfate in step (d) comprises ethanol, propanol, butanol, or a combination thereof.

10. The method of any preceding claim, wherein in the mixing of the aluminium sulfate with alcohol according to step (d), the aluminium sulfate and the alcohol are mixed in a volume ratio of 1:2 to 1:5, preferably 1:3 to 1:4.5, more preferably 1:3.5 to 1:4.5 (aluminum sulfate / alcohol).

11. The method of any preceding claim, wherein the aluminium sulfate hydrate obtained in step (d) is added to the wastewater in an amount of 10 to 300 ppm, preferably 30 to 200 ppm, more preferably 50 to 150 ppm relative to the weight of the wastewater.

12. The method of any preceding claim, further comprising supplying aluminium sulfate hydrate obtained in step (d) to a separate wastewater treatment plant.

## Patentansprüche

1. Verfahren zum Entfernen von Aluminiumabfällen aus Abwässern, wobei das Verfahren umfasst:
(a) Zuführen von Abwasser, das Aluminium enthält, als Beschickung;
(b) Trennen des Abwassers in eine flüssige Komponente und eine Schlammkomponente, die das Aluminium enthält;
(c) Umsetzen der Schlammkomponente mit Schwefelsäure, um Aluminiumsulfat herzustellen;
(d) Mischen des Aluminiumsulfats mit Alkohol, um Aluminiumsulfathydrat herzustellen; und
(e) Zugeben des Aluminiumsulfathydrats, das in Schritt (d) hergestellt wurde, zu dem Abwasser, das in Schritt (a) zugeführt wurde, um als Gerinnungsmittel für das Aluminium zu wirken.

2. Verfahren nach Anspruch 1, wobei das Abwasser, das in Schritt (a) zugeführt wurde, einen Aluminiumgehalt von 1 Gew.-% oder mehr, bevorzugt 20 Gew.-% oder mehr, besonders bevorzugt 30 Gew.-% oder mehr aufweist.

3. Verfahren nach einem der vorstehenden Ansprüche, wobei das Aluminium, das in dem Abwasser enthalten ist, das in Schritt (a) zugeführt wird, zumindest teilweise in einer Oxid- oder Hydroxidform, bevorzugt als Böhmit (AlOOH) enthalten ist.

4. Verfahren nach einem der vorstehenden Ansprüche, wobei das Verfahren zusätzlich das Zugeben von extern bezogenem Aluminiumsulfathydrat zu dem Abwasser umfasst, das in Schritt (a) zugeführt wird.

5. Verfahren nach einem der vorstehenden Ansprüche, wobei das Trennen gemäß Schritt (b) Zentrifugation umfasst.

6. Verfahren nach einem der vorstehenden Ansprüche, wobei die Schlammkomponente, die in Schritt (b) erhalten wird, einen Aluminiumgehalt von 40 Gew.-% oder mehr, bevorzugt 45 Gew.-% oder mehr, besonders bevorzugt 50 Gew.-% oder mehr aufweist.

7. Verfahren nach einem der vorstehenden Ansprüche, wobei das Umsetzen der Schlammkomponente mit Schwefelsäure gemäß Schritt (c) das Zugeben der Schlammkomponente zu einer Schwefelsäurelösung mit einer Konzentration von 0,5 bis 1,5 M, bevorzugt 0,8 bis 1,2 M, und das Ermöglichen des Umsetzens bei einer Temperatur von 60 °C bis 100 °C, bevorzugt 65 °C bis 90 °C, besonders bevorzugt 70 °C bis 80 °C, für 1 bis 5 Stunden, bevorzugt 2 bis 4 Stunden, besonders bevorzugt 2,5 bis 3,5 Stunden umfasst.

8. Verfahren nach Anspruch 7, wobei die Schlammkomponente der Schwefelsäurelösung in einer Menge von 5 bis 15 Gew.-%, bevorzugt 7 bis 12 Gew.-%, besonders bevorzugt 8 bis 11 Gew.-%, bezogen auf das Gewicht der Schwefelsäurelösung, zugegeben wird.

9. Verfahren nach einem der vorstehenden Ansprüche, wobei der Alkohol, der mit dem Aluminiumsulfat in Schritt (d) gemischt wurde, Ethanol, Propanol, Butanol oder eine Kombination davon umfasst.

10. Verfahren nach einem der vorstehenden Ansprüche, wobei beim Mischen des Aluminiumsulfats mit Alkohol gemäß Schritt (d) das Aluminiumsulfat und der Alkohol in einem Volumenverhältnis von 1:2 bis 1:5, bevorzugt 1:3 bis 1:4,5, besonders bevorzugt 1:3,5 bis 1:4,5 (Aluminiumsulfat/Alkohol) gemischt werden.

11. Verfahren nach einem der vorstehenden Ansprüche, wobei das Aluminiumsulfathydrat, das in Schritt (d) erhalten wird, dem Abwasser in einer Menge von 10 bis 300 ppm, bevorzugt 30 bis 200 ppm, besonders bevorzugt 50 bis 150 ppm, im Verhältnis zu dem Gewicht des Abwassers, zugegeben wird.

12. Verfahren nach einem der vorstehenden Ansprüche, ferner umfassend das Zuführen des Aluminiumsulfathydrats, das in Schritt (d) erhalten wird, zu einer separaten Abwasserbehandlungsanlage.

## Revendications

1. Procédé d'élimination de déchets d'aluminium à partir d'eaux usées, le procédé comprenant :
(a) l'apport d'eaux usées contenant de l'aluminium, en tant qu'alimentation ;
(b) la séparation des eaux usées en un composant liquide et un composant de boue contenant l'aluminium ;
(c) la réaction du composant de boue avec de l'acide sulfurique afin de produire du sulfate d'aluminium ;
(d) le mélange du sulfate d'aluminium avec de l'alcool afin de produire un hydrate de sulfate d'aluminium ; et
(e) l'ajout de l'hydrate de sulfate d'aluminium, produit à l'étape (d), aux eaux usées apportées à l'étape (a), afin d'agir en tant qu'agent de coagulation pour l'aluminium.

2. Le procédé de la revendication 1, dans lequel les eaux usées apportées à l'étape (a) comportent une teneur en aluminium égale ou supérieure à 15 % en poids, de préférence égale ou supérieure à 20 % en poids, de préférence encore égale ou supérieure à 30 % en poids.

3. Le procédé d'une revendication précédente quelconque, dans lequel l'aluminium contenu dans les eaux usées apportées à l'étape (a) est contenu, au moins en partie, sous forme d'oxyde ou d'hydroxyde, de préférence comme boehmite (AlOOH).

4. Le procédé d'une revendication précédente quelconque, dans lequel le procédé comprend en outre l'ajout d'hydrate de sulfate d'aluminium, provenant d'une source extérieure, aux eaux usées apportées à l'étape (a).

5. Le procédé d'une revendication précédente quelconque, dans lequel la séparation selon l'étape (b) comprend une centrifugation.

6. Le procédé d'une revendication précédente quelconque, dans lequel le composant de boue, obtenu à l'étape (b), comporte une teneur en aluminium égale ou supérieure à 40 % en poids, de préférence égale ou supérieure à 45 % en poids, de préférence encore égale ou supérieure à 50 % en poids.

7. Le procédé d'une revendication précédente quelconque, dans lequel la réaction du composant de boue avec de l'acide sulfurique, selon l'étape (c), comprend l'ajout du composant de boue à une solution d'acide sulfurique présentant une concentration comprise entre 0,5 et 1,5 M, de préférence entre 0,8 et 1,2 M, et leur réaction à une température comprise entre 60 °C et 100 °C, de préférence entre 65 °C et 90 °C, de préférence encore entre 70 °C et 80 °C, pendant 1 à 5 heures, de préférence 2 à 4 heures, de préférence encore 2,5 à 3,5 heures.

8. Le procédé de la revendication 7, dans lequel le composant de boue est ajouté à la solution d'acide sulfurique en une quantité comprise entre 5 et 15 % en poids, de préférence entre 7 et 12 % en poids, de préférence encore entre 8 et 11 % en poids, sur la base du poids de la solution d'acide sulfurique.

9. Le procédé d'une revendication précédente quelconque, dans lequel l'alcool mélangé avec le sulfate d'aluminium à l'étape (d) comprend de l'éthanol, du propanol, du butanol ou leurs combinaisons.

10. Le procédé d'une revendication précédente quelconque, dans lequel, lors du mélange du sulfate d'aluminium avec l'alcool selon l'étape (d), le sulfate d'aluminium et l'alcool sont mélangées en un rapport en volume compris entre 1:2 et 1:5, de préférence entre 1:3 et 1;4,5, de préférence encore entre 1:3,5 et 1:4,5 (sulfate d'aluminium/alcool).

11. Le procédé d'une revendication précédente quelconque, dans lequel l'hydrate de sulfate d'aluminium, obtenu à l'étape (d), est ajouté aux eaux usées en une quantité comprise entre 10 et 300 ppm, de préférence entre 30 et 200 ppm, de préférence encore entre 50 et 150 ppm, par rapport au poids des eaux usées.

12. Le procédé d'une revendication précédente quelconque, comprenant en outre l'apport de l'hydrate de sulfate d'aluminium, obtenu à l'étape (d), à une station de traitement des eaux usées séparée.
